# EUROPEAN PATENT APPLICATION

(11) **EP 3 385 898 A1**
(43) Date of publication of application: **10.10.2018**
(21) Application number: 17165536.8
(22) Date of filing: 07.04.2017
(51) Int. Cl.: G06Q 30/06, G06T 19/00, G06F 3/0484, G06Q 50/16

(54) **ARRANGEMENT FOR REAL ESTATE MARKETING**

(71) Applicant: Virtual Trade Center Oy, 33100 Tampere (FI)
(72) Inventor: MIIKKULAINEN, Atte, 33100 Tampere (FI); LINDQVIST, Tony, 33100 Tampere (FI); GRÖNBERG, Juhani, 33100 Tampere (FI)
(74) Representative: Seppo Laine Oy

(57) **Abstract**

According to an example aspect of the present invention, there is provided a virtual reality system (102) capable of generating a virtual reality view of virtual reality models of real estate assigned to the plurality of service entities, a user interface (104) comprising one or more controls capable of causing at least one operation for controlling the virtual reality system (102), wherein the virtual reality system (102) is adapted to embed the user interface (104) to a first part of the virtual reality view and a virtual reality model of real estate to a second part of the virtual reality view.

## Description

### FIELD

The present invention relates to an arrangement for real estate marketing and more particularly to a user interface for controlling a virtual reality system in the arrangement.

### BACKGROUND

Marketing real estate such as buildings, apartments, offices and other similar property typically comprises preparing brochures of the real estate. The brochures are distributed to interested parties using web pages or on paper. Presentations are typically necessary on-site such that the real estate can be inspected by potential buyers. A significant amount of real estate agent's time is consumed in arranging viewings of the real estate assigned to him/her. Similarly, a person interested to buy real estate has to contact real estate agents of the real estate for arranging on-site viewing of the real estate.

Property developers typically have own sales offices for marketing real estate before and during construction. Typical marketing material includes illustrations and construction drawings of the real estate. Usage efficiency of the sales office in terms of number of presentations to potential buyers depends on the capability of the marketed real estate to interest potential buyers and the number of potential buyers the sales office is capable of serving in a time period. The number and type of real estate marketed by a single property developer is limited, whereby the interest to potential buyers towards the real estate is also limited. For example, an apartment house with various sizes of apartments has a larger audience of interested buyers than if the only apartment left to be marketed is a pent house apartment. Therefore it is very challenging to maintain a high usage efficiency of the sales office at least when the number of real estate is low and the type of real estate does not have a large audience of potential buyers. Moreover, the nature of the marketing material is static and scattered to multiple documents. Accordingly, the material is time consuming to study and it does not support serving high numbers of potential buyers. Moreover, the marketing material has very low immersive effect for the potential buyer and it is possible that by human error not all the facts about the real estate can be discovered. Consequently, it is both time consuming and complex for the potential buyer to establish a true-to-life understanding of the real estate under construction.

### SUMMARY OF THE INVENTION

The invention is defined by the features of the independent claims. Some specific embodiments are defined in the dependent claims.

According to a first aspect of the present invention, there is provided an arrangement for real estate marketing by a plurality of service entities, the arrangement comprising:

a virtual reality system capable of generating a virtual reality view of virtual reality models of real estate assigned to the plurality of service entities;

a user interface comprising one or more controls capable of causing at least one operation for controlling the virtual reality system; wherein the virtual reality system is adapted to embed the user interface to a first part of the virtual reality view and a virtual reality model of real estate to a second part of the virtual reality view.

### BRIEF DESCRIPTION OF THE DRAWINGS

FIG. 1 illustrates an arrangement for real estate marketing by a plurality of service entities in accordance with at least some embodiments of the present invention;
FIG. 2 illustrates a system architecture for real estate marketing by a plurality of service entities in accordance with at least some embodiments of the present invention;
FIG. 3 illustrates a sequence for real estate marketing in accordance with at least some embodiments of the present invention;
FIG. 4 illustrates a flow chart for scheduling real estate marketing premises in accordance with at least some embodiments of the present invention; and
FIG. 5a, 5b and 5c illustrate views in a customer service terminal for real estate marketing premises in accordance with at least some examples of the present invention;
FIG. 6 illustrates a sequence for user interface embedded with a virtual reality model to a virtual reality view in accordance with at least some examples of the present invention;
Fig. 7 illustrates a home view in accordance with at least some examples of the present invention;
FIG. 8 illustrates a view for real estate tour recording and/or playback in accordance with at least some examples of the present invention;
FIG. 9 illustrates a floor menu in accordance with at least some examples of the present invention;
FIG. 10 illustrates a view for controlling skin in accordance with at least some examples of the present invention; and
FIG. 11 illustrates a view for controlling environmental conditions in accordance with at least some examples of the present invention.

### EMBODIMENTS

In connection with marketing real estate such as apartments and offices, an arrangement is provided comprising a virtual reality system capable of generating a virtual reality view of virtual reality models of real estate assigned to the plurality of service entities. The arrangement comprises a user interface comprising one or more controls capable of causing at least one operation for controlling the virtual reality system; wherein the virtual reality system is adapted to embed the user interface to a first part of the virtual reality view and a virtual reality model of real estate to a second part of the virtual reality view. In this way the virtual reality system can support real estate marketing by the plurality of service entities.

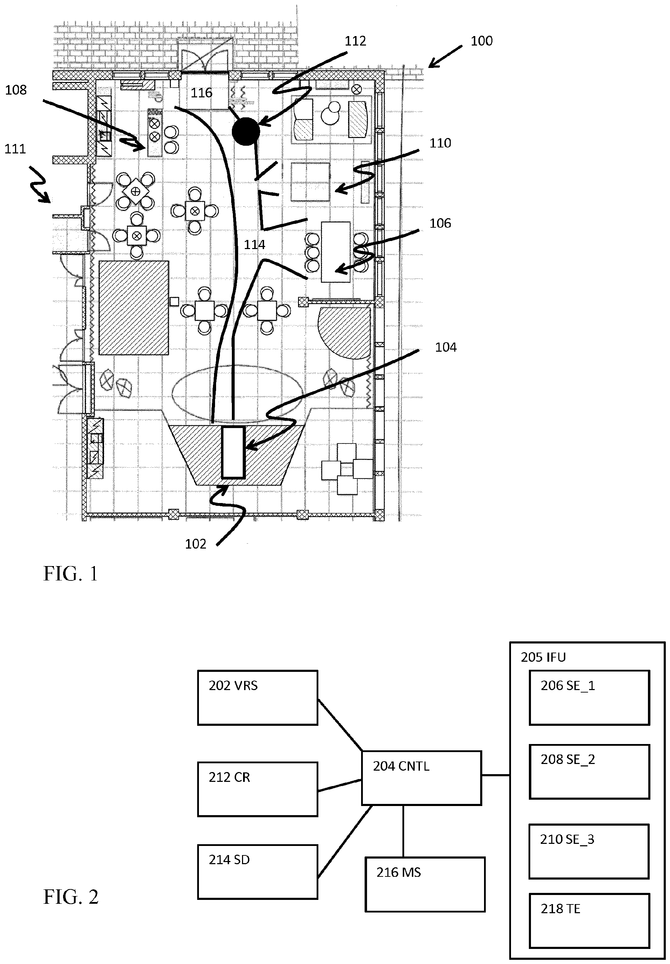

FIG. 1 illustrates an arrangement 100 for real estate marketing by a plurality of service entities in accordance with at least some embodiments of the present invention. The arrangement may comprise a Virtual Reality System (VRS) 102 capable of generating a virtual reality view of virtual reality models of real estate assigned to a plurality of Service Entities (SEs), and a user interface 104 comprising one or more controls capable of causing at least one operation for controlling the virtual reality system; wherein the virtual reality system is adapted to embed the user interface to a first part of the virtual reality view and a virtual reality model of real estate to a second part of the virtual reality view. In this way the SEs may utilize the VRS for viewing real estate. The virtual reality view provides both presentation of the virtual reality model and the controls, whereby operations may be performed on the VRS at the same time the virtual reality model is presented. Thanks to the VRS, the viewing allows a true-to-life experience to the person viewing the real estate. The VRS virtual reality model may be viewed in a recorded tour of the virtual reality model in the virtual reality view, whereby the time to view the real estate may be accurately controlled.

Preferably the VRS is capable of generating a virtual reality view viewable to a plurality of persons at the same time such that the persons are shown the same virtual reality view. In this way the persons REMP may provide a true-to-life understanding of the real estate to a group of people. Since the virtual reality view is the one and the same view to all the people, the understanding of the real estate obtained to each of the people in the group is like they were present in the actual real estate with the group. This provides advantages particularly in marketing of real estate still under construction.

It should be appreciated that it may be preferred that the virtual reality view generated by the VRS may be scaled to actual size of the real estate, particularly, when the virtual reality view presents an indoor of an apartment.

In some embodiments the virtual reality model and the user interface may be overlapping. On the other hand in some embodiments the virtual reality model and the user interface may be non-overlapping. When the user interface and the virtual reality model are overlapping, the user interface may be displayed on top of the virtual reality model and the virtual reality model may at least partly be visible from underneath the virtual model to a user viewing the virtual reality view. The visibility of the virtual model underneath the user interface may be provided by translucency of the user interface, size of the user interface being sufficiently small and/or size of the elements of the user interface being sufficiently small.

A user interface, for example a user interface embedded to a virtual reality view, may be capable of receiving user input and displaying information to the user. The user interface may be provided on a computer, a smart phone or a tablet computer provided with capability of receiving user input and displaying information to the user. The user interface may be a touch screen capable of both displaying information to the user and receiving input form the user. On the other hand the user interface may be provided by separate display device and a user input device such as a keyboard and a mouse. The user interface may comprise one or more elements that may be displayed to the user and controlled by the user by the user interface capabilities. Controlling elements or parts of the user interface may comprise selecting, receiving input, for example.

A virtual reality system may be capable of being navigated by a user. The virtual reality system may comprise means for receiving user input for moving a viewing position within the virtual reality model. The viewing position may be preferably moved in three dimensions. Additionally a viewing direction provided in the viewing position may be moved, for example tilted and/or rotated.

In an example, the arrangement may be for example Real Estate Marketing Premises (REMP). The REMP may comprise one or more entities 102, 106, 108, 110, 111 and means 104 for controlling the entities. The REMP entities comprise preferably floor space capable of being shared between the SEs. The REMP entities may comprise a Virtual Reality System (VRS) 102 capable of generating a virtual reality view of virtual reality models of real estate assigned to a plurality of Service Entities (SEs). The means for controlling the entities may be provided by the user interface 104 comprising one or more controls capable of causing the VRS to generate a virtual reality view of at least one virtual reality model of real estate assigned to a service entity, when the VRS is scheduled to the service entity at a given time. In this way the SEs may utilize the VRS at scheduled times such that the REMP may be shared and used for viewing real estate of more than one SE. Thanks to the VRS, the viewing allows a true-to-life experience to the person viewing the real estate. The VRS virtual reality model may be viewed in a recorded tour of the virtual reality model in the virtual reality view, whereby the time to view the real estate may be accurately controlled.

In an embodiment, the VRS 102 comprises one or more virtual caves. A virtual cave refers to a part of the real estate, e.g. building, apartment, office, where a virtual reality view may be presented viewable to a person within the virtual reality cave on a physical structure forming a part of the real estate. The virtual reality cave comprises a wall surface and a floor surface and projecting means. The projecting means may be connected to a source of video signal. The video signal received from the source of video signal may be projected by the projecting means on the wall and floor surfaces. The projected video signal may be a stereo video signal, for example. The virtual reality view may be viewed by a person, when the person is observing the projections on the wall and floor surfaces. The virtual cave may have a viewing location. The viewing location is a location on the floor space of the virtual cave, where the virtual reality view may be optimally viewed by a person. The VRS may comprise a virtual reality viewing accessory for viewing the virtual reality view. The virtual reality viewing accessory may be worn by the person for viewing the virtual reality view. Examples of the virtual reality viewing accessory comprise virtual reality glasses. Virtual reality glasses may be adapted for viewing the projected stereo video signal. For example, the virtual reality glasses may comprise different colors of lenses/films in front of the left and right eyes.

In an embodiment, the virtual reality models may be stored associated to a responsible service entity such that the user interface is capable of generating virtual reality views only for the real estate assigned to the responsible service entity. The virtual reality models may be stored in a library. The arrangement 100, for example the REMP, may comprise the library of virtual reality models. The library may be operatively connected to the VRS 102 for displaying the virtual reality models of real estate assigned to the service entities. The service entities may access the virtual reality models via the VRS. Each service entity may be capable of accessing only the virtual reality models that represent real estate assigned to the service entity, i.e. the responsible service entity.

It should be appreciated that the access to the virtual reality models may be subject to authentication of the service entity. The arrangement 100, for example the REMP, may comprise means for authenticating service entities. Accordingly, the VRS may be controlled to present virtual reality models of the service entity subject to authentication of the service entity using the means for authenticating service entities. The means for authenticating may comprise an input element of the user interface capable of accepting a service entity specific code. The user interface may be provided on the VRS 102 or a customer service Terminal (TE) 112 in the REMP, for example.

The REMP entities may further comprise one or more of a Conference Area (CA) 106, a Service Desk (SD) 108, an interior design Materials Area (MA) 110, a Materials Storage 111, and a customer service Terminal (TE) 112. The conference area, the service desk and the interior design materials area may be arranged in separate rooms or in an open space. In the open space the conference are, the service desk and the interior design materials area may be separated by open space and/or a passage 114. The passage may comprise open space in the REMP and/or a structurally limited space capable of allowing movement of people between one part of the REMP and another part of the REMP. Alternatively or additionally, the passage may be capable of allowing movement of people between one part of the REMP and an entrance and/or exit 116.

In an example the MS 110 comprises interior design material for viewing by potential buyers. The interior design material may comprise tile, work surface material, floor material, fixture material samples of the marketed real estate. The material may be provided in various colors and types. In this way potential buyers may obtain an understanding of the options for the actual material to be used in the real estate.

The MS 110 is preferably scheduled to one or more service entities to be used in connection with the use of the VRS in the REMP. In one example the MS may be scheduled for continuous shared use for the SEs, whereby the MS may be visited by the potential buyers before and after the real estate viewing using the VRS. In another example the MS may be scheduled for private use of the SE at the same time with the VRS such that the potential buyers may utilize both the MS and the VRS at the same time for obtaining an improved a true-to-life understanding of the real estate.

The materials storage 111 may be used to store materials of SEs, when the MS is not scheduled to the SEs. Accordingly, in this way materials of the SE, who the MA is scheduled to, may be moved from the MS to the MA viewable to potential buyers.

In an example the CA 106 comprises a table and chairs for negotiations and signing of contracts regarding the real estate. Alternatively or additionally, the CA may have typical marketing material, for example illustrations and construction drawings of the real estate, available for studying.

In an example the SD 108 comprises a workspace for customer service personnel. The SD may preferably be located near the entrance and/or exit 116 of the REMP such that the customer service personnel may be easily contacted by people visiting the REMP.

In an example, the arrangement 100 may comprise a customer service terminal (TE) 112. The TE may provide for automated customer service alternatively or additionally to personal customer service.

The TE and/or the VRS may have a user interface capable of receiving user input and displaying information to the user. Examples of the TE and VRS comprise: a computer; a smart phone and a tablet computer. The user interface on the TE and VRS may be provided by a touch screen capable of both displaying information to the user and receiving input form the user. On the other hand the user interface on the TE and VRS may be provided by a separate display device and a user input device such as a keyboard and a mouse.

In an example, the TE 112 is arranged at an exit and/or entrance 116 of the REMP. In this way the TE is easily accessible for people visiting the REMP. The TE may be arranged on a pole, whereby the TE is elevated above the floor to allow use of the TE when people are standing, while taking only small floor space provided by the small floor space required by the pole. A suitable height for the TE may be between 0.7 m and 1 m.

In an example, the REMP 100 comprises a passage 114 connecting the VRS 102 to the TE. In this way people may move from the VRS after viewing the virtual reality view to the TE, where their contact information may be collected by the TE and sent to service entities. TE 112 may be adapted to receive user input comprising one or more of: a selection of a service entity of first type, a selection of a service entity of a second type and contact information. The user input may be received via a user interface provided in the TE.

In an example, the TE 112 is adapted to categorize information selectable by user input into views comprising a contact information input form and at least one of: selectable service entities of first type and selectable service entities of second type; and on receiving user input to the contact information input form and at least one further view, the TE is adapted to send the contact information of the user to one or more service entities selected by the user. In this way the user may select which service entities in each category he/she is interested and the contact information is sent only to the selected service entities.

In an example, the contact information may be sent by data communications means. The data communications means may comprise a wired or wireless data connection. The TE may comprise an external or an internal module for the wireless or wired data connection.

Examples of the types of service entities comprise banks, real estate agents, removal firms, renovation companies, construction companies and cleaning companies. The contact information may comprise information for contacting the customer, for example name, address, phone number and email address.

In an example, an office, structure or a building comprises the REMP 100. The REMP may be arranged on a floor space of the office, the structure or the building. At least part of the floor space is scheduled for shared use of the VRS 102 for the service entities.

FIG. 2 illustrates system architecture for an arrangement in accordance with at least some embodiments of the present invention. The system architecture illustrates entities and connections between the entities for implementing an arrangement, for example the arrangement 100 in FIG. 1. Referring to FIG. 2 the system architecture comprises at least a VRS 202 for shared use between SEs (SE_1, SE_2 and SE_3) 206, 208, 210 and means for controlling (CNTL) 204 the VRS. The CNTL may be connected to a plurality of SEs and/ or a TE via an Interface Unit (IFU) 205. The IFU provides communications of information between the SEs, TE and the CNTL such that the shared use of the VRS is facilitated.

The means for controlling 204 may be a user interface comprising one or more controls capable of causing at least one operation for controlling the virtual reality system; wherein the virtual reality system is adapted to embed the user interface to a first part of the virtual reality view and a virtual reality model of real estate to a second part of the virtual reality view. In this way the virtual reality system can support real estate marketing by the plurality of service entities. Accordingly, the real estate assigned to a specific SE may be controlled via the user interface in the virtual reality view including the real estate.

It should be appreciated that the arrangement may comprise further entities in addition to the VRS that may be shared by the SEs. The further entities may comprise one or more CAs 212, SDs 214, MSs 216 and TEs 218.

The means for controlling 204 may be capable of obtaining/storing profile information of the SEs. The profile information may comprise types of marketing events and their mapping to the entities. In this way the SEs may be scheduled entities based on predefined information comprising for example duration and/or entities according to each marketing event.

In an example, entities of the system architecture may be REMP entities and located within the REMP. On the other hand connections between the entities provide that some of the entities may be located physically outside of the REMP, while still belonging to the REMP according to a functional aspect of the REMP. A REMP entity, VRS, CA, SD, MS and/or TE, comprising floor space for sharing between the SEs, may be implemented one or more physical structures that have one or more functional elements. Examples of the physical structures comprise a room, a structure within a room or area of the floor space of the REMP. Examples of the functional elements comprise a computer or a computer program. In one example a computer program implementing a functional entity may comprise an electronic calendar capable of maintaining and updating scheduling information of the REMP entity such that SEs may be scheduled to use the REMP entity.

Connections between the entities in the architecture may comprise wired or wireless data connections. The wireless data connection may be a mobile communications network connection or an IEEE 802.11 wireless local area network (WLAN) connection. The wired data connection may be provided by an Ethernet connection, a databus or a physical memory.

Examples of information communicated between the IFU 205 and the CNTL 204, comprise: scheduling requests, scheduling grants and feedback. A scheduling request may be a message from the IFU to the CTNL. The scheduling request may comprise information indicating a request to reserve a specific part of the REMP to a specific SE at a given time. A scheduling grant may be an answer message from the CNTL to the IFU and triggered by a scheduling request. The scheduling grant may comprise information indicating whether the scheduling request is granted as requested, granted as amended or rejected. A feedback may be a feedback message comprising information indicating a need for more time to use the REMP entities and/or need for more entities to be scheduled at the same time.

The IFU 205 may be capable of generating scheduling requests and feedback, and receiving scheduling grant messages. The IFU may comprise a user interface, via which the SEs and/or TE may be capable of causing the scheduling requests and feedback. The scheduling grants may be used to generate a view of reserved entities to be displayed to the SEs via the IFU. In one example, user interface of the IFU may be a web-based user interface. The web-based user interface may be accessed and viewed by the SE via a web browser, for example. In one example, the web-based user interface may be displayed on the TE.

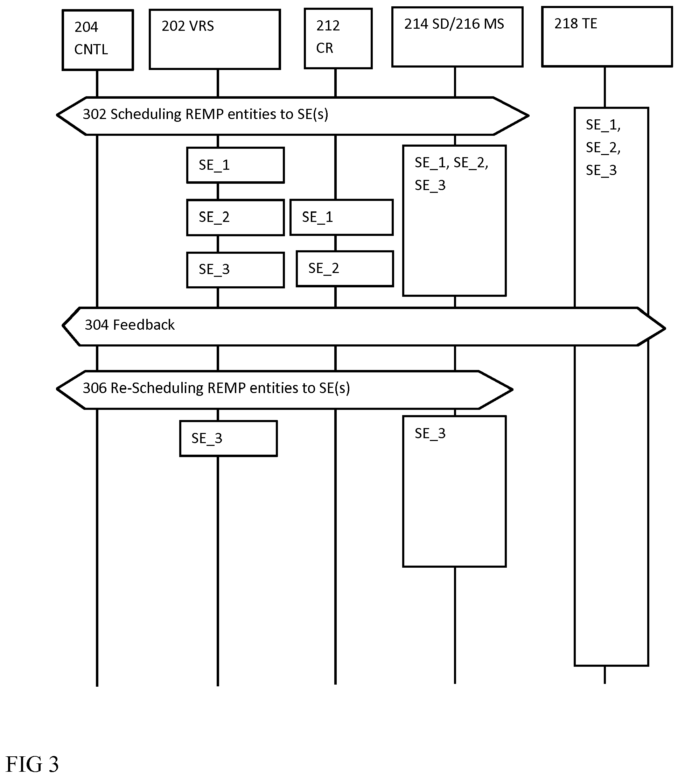

FIG. 3 illustrates a sequence an arrangement in accordance with at least some embodiments of the present invention. The sequence is described using REMP as example of the arrangement, without limiting thereto. The sequence describes scheduling of the REMP entities VRS, CA, SD, MS, TE to SEs with reference to FIG. 2. In the sequence time progresses downwards and illustrates order of events. SEs (SE_1, SE_2, SE_3) scheduled to use a REMP entity are defined on a time line extending downwards from the REMP entity.

In phase 302 the CNTL may schedule one or more entities of the REMP to SEs. The scheduling may be performed on the basis of scheduling requests received from the SEs. Scheduling grants are sent to the SEs in response to the scheduling requests for indicating results of the scheduling performed by the CNTL. The scheduling may be performed in a time-division manner, whereby an SE scheduled to use an entity during one time period may use the entity for its private use during the time period. Before and/or after an entity is scheduled to be used by one of the SEs, another SE may be scheduled to use the entity. It should be appreciated that an entity may be scheduled to use an SE for one or more time periods that may be consecutive or separate in time. On the other hand the scheduling may be performed for continuous shared use, whereby more than one or all of the service entities may use the scheduled entity.

In the sequence of FIG. 3, the scheduling phase 302 causes the VRS to be scheduled first to SE_1, second to SE_2 and third to SE_3. The same SE is not scheduled CA or other REMP entities for its private use at the same time the VRS is scheduled to the SE for private use. Accordingly, other REMP entities such as the CA are scheduled to the SE after the scheduled use of the VRS to the same SE. On the other hand, the service entities SE_1, SE_2 and SE_3 may be scheduled for continuous shared use of the TE, SD and/or MS at the same time they are separately scheduled to use the VRS. Accordingly, in phase 302 the entities SD/MS and TE are scheduled for continuous shared use to the SEs SE_1, SE_2 and SE_3. In this way the REMP entities SD/MS and TE may be accessed by the SE scheduled at the same time to use the VRs.

In phase 304, the CNTL may obtain feedback. The feedback may be obtained from the SEs or from the TE. In this way the scheduling may be provided information regarding a need for more time to use the REMP entities and/or need for more entities to be scheduled at the same time. In one example, the feedback may be obtained via a web-based user interface completed by a user.

In phase 306, the CNTL may perform scheduling on the basis of the feedback. This scheduling may be referred to re-scheduling. Following the feedback an SE may be scheduled for using privately one or more of the REMP entities privately at the same time. The feedback provides that the SE may be scheduled REMP entities according to the need of the service entity with improved accuracy. In the illustration of FIG. 3 the SB_3 is scheduled the VRS and the MS at the same time. It should be appreciated that also other configurations of REMP entities VRS, CA, SD, MS and TE are possible. When more than one REMP entity is scheduled to the SE, the SE may use the REMP without interference from other SEs. Other SEs may be scheduled more than one REMP entity for private use in a similar manner.

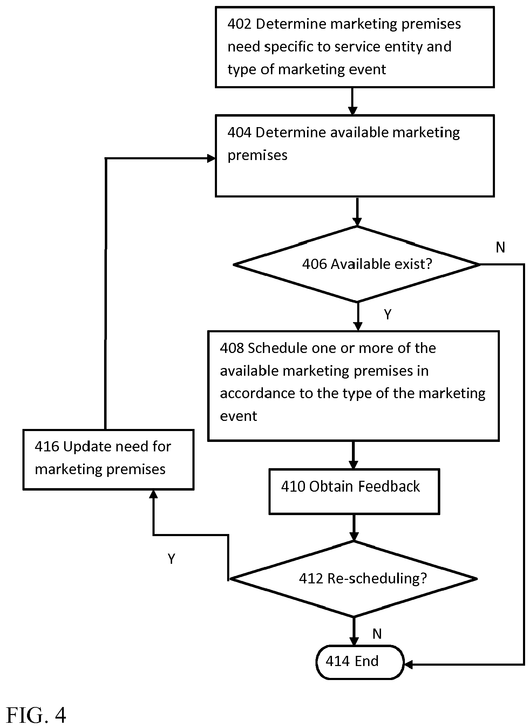

FIG. 4 illustrates a flow chart for scheduling real estate marketing premises in accordance with at least some embodiments of the present invention. The flow chart may be performed by means 204 for controlling in the system architecture of FIG. 2. The means for controlling may be an apparatus or arrangement comprising at least one processing core, at least one memory including computer program code. The at least one memory and the computer program code being configured to, with the at least one processing core, cause the apparatus at least to perform the phases of FIG. 4. The phases of FIG. 4 may be performed in a sequence illustrated in FIG. 3. For example, phases 402 to 408 may be performed as part of phase 302 in FIG. 3. Phase 410 may be performed as part of phase 304. Phases 412 and 416 may be performed as part of phase 306. The

In phase 402, a need for REMP entities specific to service entity and type of marketing event is determined. The need for REMP entities may comprise a time period a specific REMP entity is needed. Types of marketing events and their mapping to REMP entities may be predefined, for example regarding a number and/or type of REMP entities needed for a specific type of marketing event.

The need may be determined on the basis of scheduling requests from SEs, wherein the scheduling requests may comprise information indicating a type of marketing event. It should be appreciated that information indicating the type of marketing event may be obtained in separate messages or the information may be preconfigured to a profile of the service entity.

In phase 404 available REMP entities are determined. The available REMP entities may be determined in accordance with the type of the marketing event and the determined need for REMP entities.

If 406 available REMP entities exist, one or more one or more of the available REMP entities are scheduled 408 in accordance with the type of the marketing event and the need for REMP entities. The scheduling may be performed similar to described in phase 302 in FIG. 3. If 406 available marketing premises do not exist, the flow chart proceeds to end 414.

In phase 410 feedback is obtained regarding the scheduling from the SEs or from the TE.

If 412 the feedback indicates a change in the need for REMP entities and/or a change in type of marketing event, the need for REMP entities and/or the type of marketing event is updated 416 and available REMP entities are determined on the basis of the updated need and/or type in phase 404. Otherwise 412, the flow chart proceeds to end 414.

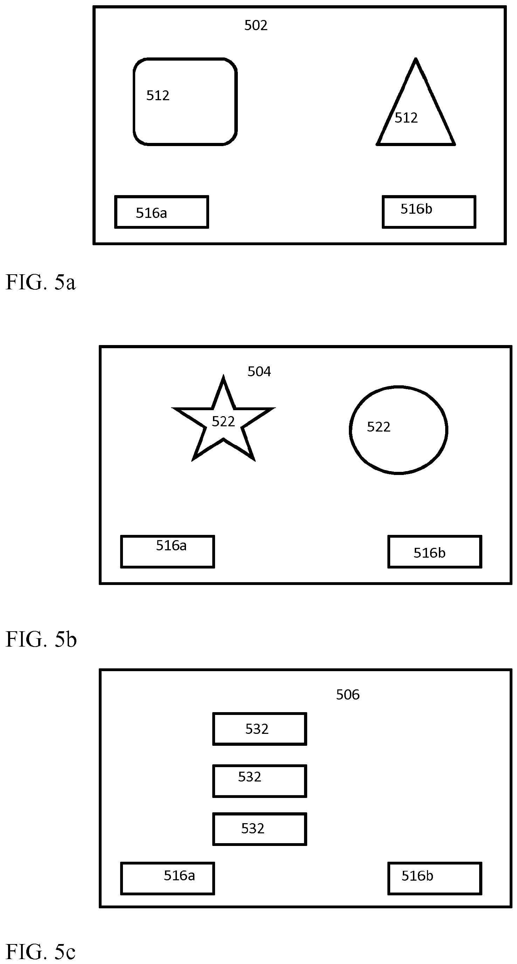

FIG. 5a, 5b and 5b illustrate views in a customer service terminal for real estate marketing premises in accordance with at least some embodiments of the present invention. The views 502, 504, 506 may comprise a contact information input form 506 and at least one of: selectable service entities 512 of first type and selectable service entities 522 of second type. The contact information input form may comprise one or more input fields 532 for receiving contact information from the user. The contact information may comprise for example name, address and telephone number. The contact information may be received by a single input field or more input field may be used. The views may comprise one or more user input elements 516a, 516b for moving between the views and/or sending the contact information input form to the selected one or more service entities. Accordingly, on receiving user input on a user input element 516a, 516b, the view may be changed to another view. The view may be traversed in an ordered sequence, whereby at least the user input element of the last view may cause sending the contact information input form to the selected one or more service entities.

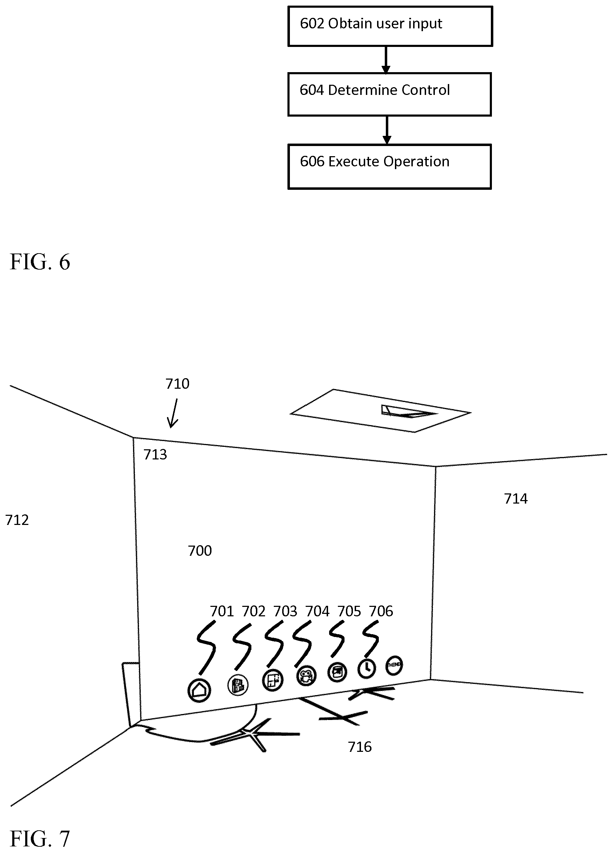

FIG. 6 illustrates a sequence for user interface embedded with a virtual reality model to a virtual reality view in accordance with at least some examples of the present invention. The sequence may be performed by an arrangement comprising a VRS and a user interface capable of causing at least one operation for controlling the VRS. The user interface may comprise one or more controls that comprise one or more from a group comprising: home view, real estate tour recording, real estate tour playback, an indoor view, an outdoor view, skin, environmental conditions. The controls may be user selectable elements. At least one operation may be caused for controlling the VRS in response to a selection of the control by a user. The arrangement may follow the architecture described in FIG. 1 for example. One or more phases of the sequence may be performed by the user interface, the VRS and/or an entity of the arrangement defined in the system architecture of FIG. 2. On the other hand, the phases may be performed by a single entity, for example controller comprising a user interface, or the phases may be performed by different entities, for example a controller comprising a user interface and a VRS.

A user selectable element may be visible elements on a user interface which may be selected by the user by means of input capabilities of the user interface. Examples of the input capabilities comprise touch, mouse click and key press.

In phase 602, user input may be obtained from a user. The user input may be obtained by the user interface. The user interface may comprise user selectable elements corresponding to controls.

In phase 604 at least one control capable of causing at least one operation for controlling the VRS may be determined. The received user input may indicate the control. The control may be determined when the user input is obtained on the element corresponding to the control.

In phase 606 an operation associated with the determined control may be executed. The execution of the operation may cause controlling the VRS, wherein the VRS is adapted to embed the user interface to a first part of the virtual reality view and a virtual reality model of real estate to a second part of the virtual reality view.

In one example phase 606 may cause an operation of displaying a view for controlling home view, real estate tour recording, real estate tour playback, an indoor view, an outdoor view, skin or environmental conditions. The displayed view may provide additional operations as will be apparent from the below description.

In an example, the indoor view control may be adapted to allow a user to navigate in a virtual model of the real estate to a location, for example to an apartment, inside the real estate.

In an example, the outdoor view control may be adapted to allow a user to navigate in a virtual model of the real estate to a location outside, for example on the yard, the real estate.

In an example a view, for example the home view, may be presented in one part of the virtual reality view at the same time a virtual reality model of real estate is presented in one or more other parts of the virtual reality view. When a user selects one of the user selectable elements of the home view, the VRS is caused to change the home view to another view. The virtual reality model may be maintained unchanged. It should be appreciated that one or more other views may be presented on top of the virtual reality model such that the views may overlap with the virtual reality model. However some views, for example the home view, may be presented without overlapping with the virtual reality model.

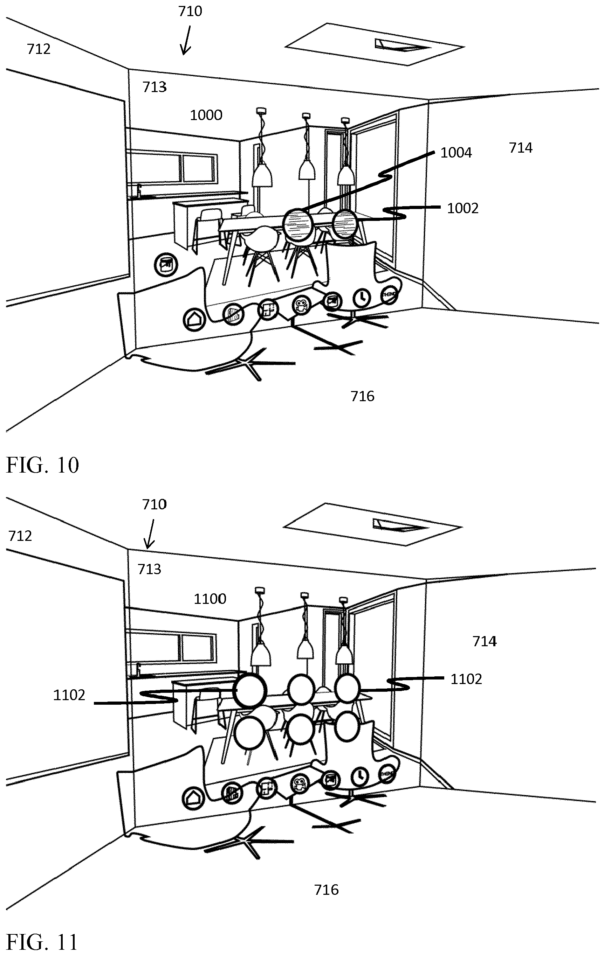

FIGs. 7 to 11 illustrate views embedded to virtual reality views 710. The views may be user interfaces that may be operated according to the sequence of FIG. 6. The virtual reality views may be presented by a VRS for example in a virtual cave. The views may be presented on one or more of the wall surfaces 712, 713, 714 and/or on a floor surface 716 of the virtual cave. In FIGS. 7 to 9 the views are presented in one part of the virtual reality view at the same time a virtual reality model of real estate is presented in one or more other parts of the virtual reality view. In FIGs. 10 and 11 the views are presented on top of the virtual reality model such that the views may overlap with the virtual reality model. However some views, for example the home view, may be presented without overlapping with the virtual reality model.

Fig. 7. Illustrates a home view 700 in accordance with at least some examples of the present invention. The home view may be a user interface embedded in the virtual reality view 710. The home view may comprise one or more controls for controlling the VRS. The home view may be presented to the user as the first view before other views comprising controls for controlling the VRS. The home view may comprise one or more user selectable elements serving as controls. The controls may comprise, but not limited to, one or more from a group comprising: home view 701, real estate tour recording 704, real estate tour playback 705, an indoor view 703, an outdoor view 702, skin 705, environmental conditions 706. On selecting a control on the home view, the home view may be changed to a view corresponding to the selected control. The home view control may be displayed in the home view and one or more further views. The home view control may cause displaying the home view, in response to the user selecting the home view control.

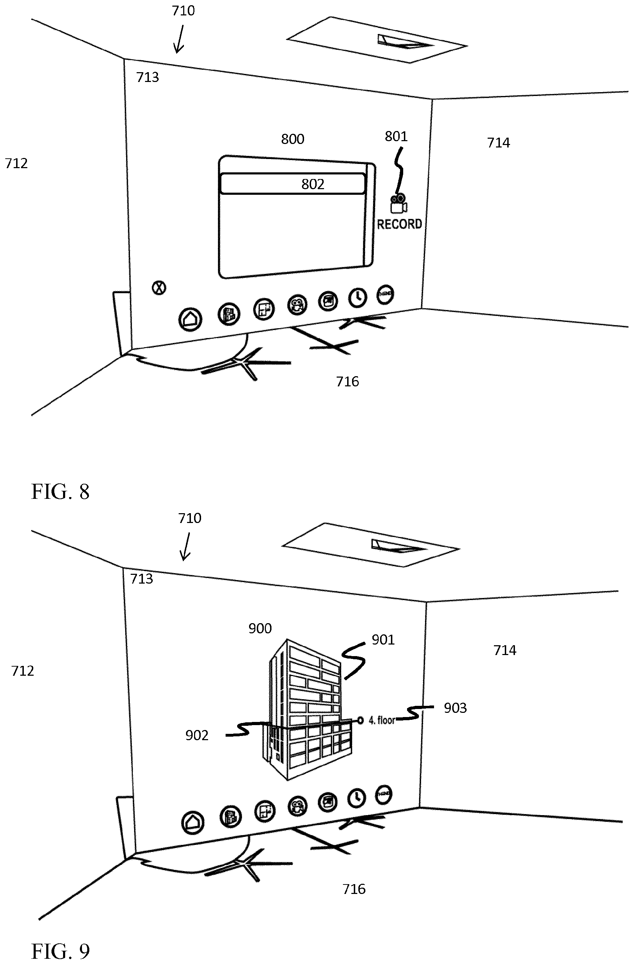

FIG. 8 illustrates a view 800 for real estate tour recording and/or playback in accordance with at least some examples of the present invention. The real estate tour recording and/or playback view may be a user interface embedded in the virtual reality view. The view for real estate tour recording and/or playback may be caused to be presented in the virtual reality view in response a user selecting an element corresponding to the real estate tour recording 704 and/or playback 705 in the home view.

The view for real estate tour recording may comprise one or more user selectable elements 801 serving as controls to initiate recording and to stop recording. Accordingly, at least one of the elements may cause recording a real estate tour in a virtual model displayed in the virtual reality view under control of the user and at least one of the elements may cause that recording the real estate tour is stopped. When the recording is stopped, the recorded real estate tour is stored for playback in association with the virtual model. During recording of the real estate tour, the virtual reality model presented in the virtual reality view may be navigated by the user using the VRS. The real estate tour may be under control of the user, when a viewing position and/or viewing direction may be controlled by the user by means of navigating capabilities of the VRS.

The view for real estate tour playback 800 may comprise one or more user selectable elements 802 serving as controls for the user to initiate playback and to stop playback. Accordingly, at least one of the elements may cause playback of recorded real estate tour of virtual model and at least one of the elements may cause that the playback is stopped. Preferably, playback of the real estate tour corresponding to a real estate currently displayed in the virtual reality view is initiated in response to the user selection. In this way the virtual reality model for playback is visible to the user already before the playback is initiated.

FIG. 9 illustrates a floor menu 900 in accordance with at least some examples of the present invention. The floor menu may be a user interface embedded in the virtual reality view. The floor menu provides navigating to an apartment in a virtual reality model of a multi-storey real estate. The multi-storey real estate may be an apartment block for example. The floor menu may be displayed in response to a user selecting an element corresponding to the indoor view 703 in the home view. Accordingly, the floor menu may serve for indoor view control. The floor menu presents an outside view of the virtual model of the multi-storey real estate 901. The floor menu comprises a user controllable indicator 902 for indicating a floor of the virtual model. The user controllable indicator may cause highlighting a floor of the virtual model available for selection by the user on top of the outside view of the virtual reality model. In one example the indicator may comprise a graphical element and information 903 indicating the number of the floor. The indicator may be movable up and/or down the virtual reality model for indicating different floors of the real estate. In this way the user may observe the floors and the number of the floor for finding a desired floor in the virtual reality model. The use may view the virtual model from different compass directions, e.g. north, south , east, west. The indicator may be visible in the different compass directions such that the use may select the floor, when the virtual model is viewed from different viewing directions.

A floor plan of the floor selected by the user may be displayed in response to the user selecting the floor indicated by the user controllable indicator 902. The floor plan may comprise one or more apartments for selection of the user. A user controllable indicator for indicating an apartment may be displayed on top of the floor plan. The user controllable indicator may cause highlighting an apartment of the floor plan available for selection by the user. In one example the indicator may comprise a graphical element and information indicating the number of the apartment. The indicator may be movable in the floor plane for indicating different apartments in the floor plan. In this way the user may observe the apartments and the number of the apartments for finding a desired apartment in the floor plan. A floor plan of the apartment selected by the user may be displayed in response to the user selecting the apartment indicated by the user controllable indicator.

FIG. 10 illustrates a view 1000 for skin control in accordance with at least some examples of the present invention. The skin control view may be a user interface embedded in the virtual reality view. The skin control view may be caused in response a user selecting an element 705 corresponding to the skin control in the home view. The skin control view may comprise one or more user selectable elements 1002, 1004 serving as controls to select a skin to be applied to a specific type of elements in the virtual model. The specific type of elements may be selected on the basis of user input on the virtual reality model. The skin control view may present user selectable elements corresponding to each selectable skin. Accordingly, the user selectable elements of the skin control view may cause selection of the skin corresponding to the element and applying the skin to the specific type of elements of the virtual reality model, when the user selectable element is selected by the user. In one example the types of elements in the virtual reality model comprise floor, wall, kitchen cabinet door, kitchen countertop and/or bathroom countertop. In one example the selectable skins may comprise color schemes and/or materials. A material skin may represent a specific material, when applied in an element in the virtual reality model. Examples of the materials comprise wood, tile, laminate and wall paper.

Preferably, the skin control view is embedded to the virtual reality view on top of the virtual reality model. In this way, the virtual reality model, where the skin selected by the user is applied, may be viewed together with the skin control view. Accordingly, the virtual reality model may be updated in response to the user selecting a skin using the elements of the skin control view, whereby the user may easily observe the change caused by the skin in the virtual reality model.

In one example, a user input may be received indicating that an apartment floor in the virtual reality model is selected. Then the skin control view may present user selectable elements for selecting skins to the apartment floor. If the skin applied to the apartment floor is satisfactory to the user, the user may then select another type of element in the virtual reality model, for example a kitchen countertop, in the virtual reality model. Selecting another type of element may cause the skin control view to present user selectable elements for selecting skins to the selected another type of element in the virtual reality model. When skins for specific type of elements of the virtual reality model are presented, the virtual reality model may be updated in response to the user selecting a skin from alternative skins presented in the skin control view.

FIG. 11 illustrates a view 1100 for controlling environmental conditions in accordance with at least some examples of the present invention. The environmental conditions control view may be a user interface embedded in the virtual reality view. The environmental conditions control view 1100 may comprise one or more user selectable elements 1102 serving as controls to select environmental conditions to be applied to the virtual model. Accordingly, current environmental conditions of the virtual reality model may be swapped to new environmental conditions in response to a user selecting the element corresponding to the new environmental conditions.

The environmental conditions control view may be displayed in response a user selecting an element representing the skin control view in the home view. The environmental conditions may comprise one or more of a time of day, weather conditions and a season. The environmental conditions may be applied to the virtual model such that the virtual model may present a true-to-life experience to the user. Accordingly, at least one of an amount of natural light and direction of natural light in the virtual reality model may be adjusted on the basis of the environmental conditions selected by the user.

An apparatus, entity or arrangement according to an embodiment may comprise memory and processor. Memory may comprise random-access memory and/or permanent memory. Memory may comprise at least one RAM chip. Memory may comprise solid-state, magnetic, optical and/or holographic memory, for example. Memory may be at least in part accessible to processor, a computer or other means for controlling. Memory may be at least in part comprised in processor. Memory may be means for storing information. Memory may comprise computer instructions that processor is configured to execute. When computer instructions configured to cause processor to perform certain actions are stored in memory, and apparatus overall is configured to run under the direction of processor using computer instructions from memory, processor and/or its at least one processing core may be considered to be configured to perform said certain actions. Memory may be at least in part comprised in processor. Memory may be at least in part external to device but accessible to device. Processor may comprise, for example, a single-or multi-core processor wherein a single-core processor comprises one processing core and a multi-core processor comprises more than one processing core. Processor may comprise more than one processor. A processing core may comprise, for example, a Cortex-A8 processing core manufactured by ARM Holdings or a Steamroller processing core produced by Advanced Micro Devices Corporation. Processor may comprise for example Qualcomm Snapdragon and/or Intel Atom processor. Processor may comprise at least one application-specific integrated circuit, ASIC. Processor may comprise at least one field-programmable gate array, FPGA. Processor may be means for performing method steps in device. Processor may be configured, at least in part by computer instructions, to perform actions.

It is to be understood that the embodiments of the invention disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular embodiments only and is not intended to be limiting.

Reference throughout this specification to "one embodiment" or "an embodiment" means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present invention may be referred to herein along with alternatives for the various components thereof. It is understood that such embodiments, examples, and alternatives are not to be construed as de facto equivalents of one another, but are to be considered as separate and autonomous representations of the present invention.

Furthermore, the described features, structures, or characteristics may be combined in any suitable manner in one or more embodiments. In the following description, numerous specific details are provided, such as examples of lengths, widths, shapes, etc., to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

While the forgoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", i.e. a singular form, throughout this document does not exclude a plurality.

### ACRONYMS LIST

- CNTL: means for controlling
- CA: Conference Area
- IFU: Interface Unit
- MA: Materials Area
- MS: Materials Storage
- SD: Service Desk
- SE: Service Entity
- REMP: Real Estate Marketing Premises
- TE: customer service Terminal
- VRS: Virtual Reality System
- WLAN: Wireless Local Area Network

### REFERENCE SIGNS LIST

- 102-: Virtual Reality System
- 104: means for controlling
- 106: Conference Area
- 108: Service Desk
- 110: Materials Area
- 111: Materials Storage
- 112: customer service Terminal
- 114: passage
- 116: entrance and/or exit
- 202-218: System architecture entities of FIG. 2
- 302-306: Phases of the sequence of FIG. 3
- 402-416: Phases of the flow chart of FIG. 4
- 502-506: Views in customer service terminal in FIG. 5
- 512, 522: selectable service entities in FIG. 5
- 532: input fields in FIG. 5
- 516a, 516b: user input elements in FIG. 5
- 602-606: Phases of the sequence of FIG. 6
- 700: Home view in FIG. 7
- 701-706: Controls in a home view in FIG. 7
- 710: Virtual reality view in FIGs. 7 -11
- 712 - 714: Wall surfaces in FIGs. 7 -11
- 716: Floor surface in FIGs. 7 -11
- 800: View for real estate tour recording and/or playback in FIG. 8
- 801, 802: User selectable elements FIG. 8
- 900: Floor menu in FIG. 9
- 901: Virtual model in FIG. 9
- 902: User controllable indicator in FIG. 9
- 903: Information indicating the number of the floor in FIG. 9
- 1000: View for skin control in FIG. 10
- 1002, 1004: user selectable elements in FIG. 10
- 1100: view for controlling environmental conditions in FIG. 11
- 1102: user selectable elements in FIG. 11

## Claims

1. An arrangement (100) for real estate marketing by a plurality of service entities, the arrangement comprising:
a virtual reality system (102) capable of generating a virtual reality view of virtual reality models of real estate assigned to the plurality of service entities;
a user interface (104) comprising one or more controls capable of causing at least one operation for controlling the virtual reality system (102); wherein the virtual reality system (102) is adapted to embed the user interface (104) to a first part of the virtual reality view and a virtual reality model of real estate to a second part of the virtual reality view.

2. An arrangement (100) according to claim 1, wherein the virtual reality system (102) comprises one or more virtual caves.

3. An arrangement (100) according to claim 2, wherein the virtual caves are scheduled in a time-division manner for use to the service entities.

4. An arrangement (100) according to any one of the preceding claims, wherein the virtual reality model embedded to the second part of the virtual reality view is controllable by the one or more controls of the user interface (104).

5. An arrangement (100) according to any one of the preceding claims, wherein the controls comprise one or more from a group comprising: home view, real estate tour recording, an indoor view, an outdoor view, skin, environmental conditions.

6. An arrangement (100) according to claim 5, wherein selection of the recording causes recording a real estate tour in a virtual model displayed in the virtual reality view under control of the user; and when the recording is stopped, the recorded real estate tour is stored for playback in association with the virtual model.

7. An arrangement (100) according to claim 5, wherein selection of the real estate tour playback causes initiating a real estate tour corresponding to a real estate currently displayed in the virtual reality view.

8. An arrangement according to claim 5, wherein selection of the skin causes.
- swapping a current skin applied to at least part of the virtual reality model to a new skin; and/or
- displaying available skins to be applied to at least part of the virtual reality model.

9. An arrangement (100) according to claim 5, wherein selection of the indoor view causes displaying a floor menu, wherein a floor available for selection is highlighted on top of an outside view of the virtual reality model.

10. An arrangement (100) according to claim 9, wherein selection of the floor causes displaying a floor plan of the selected floor.

11. An arrangement (100) according to claim 5, wherein selection of the environmental conditions causes.
- swapping environmental conditions applied to the virtual reality model to new environmental conditions; and/or
- displaying environmental conditions available to be applied to the virtual reality model.

12. An arrangement (100) according to any one of the preceding claims, wherein the virtual reality models in the library are stored associated to a responsible service entity such that the user interface (104) is capable of generating virtual reality views only for the real estate assigned to the responsible service entity.

13. An arrangement (100) according to any one of the preceding claims, comprising means for authenticating service entities; and the virtual reality means are controlled to present virtual reality models of the determined service entity subject to authentication of the service entity.

14. An arrangement (100) according to claim 13, wherein the means for authenticating comprises an input element of the user interface (104) capable of accepting a service entity specific code.
